# EUROPEAN PATENT APPLICATION

(11) **EP 2 571 302 A1**
(43) Date of publication of application: **20.03.2013**
(21) Application number: 11780085.4
(22) Date of filing: 01.04.2011
(51) Int. Cl.: H04W 8/26

(54) **METHOD, APPARATUS AND SYSTEM FOR PROCESSING LOCAL ADDRESS IN SHUNT CONNECTION**

(30) Priority: 10.05.2010 CN 201010177324
(71) Applicant: ZTE Corporation, Shenzhen, Guangdong 518057 (CN)
(72) Inventor: ZHOU, Na, Guangdong 518057 (CN); ZONG, Zaifeng, Guangdong 518057 (CN); LIANG, Shuang, Guangdong 518057 (CN); WANG, Jing, Guangdong 518057 (CN)
(74) Representative: Zimmermann, Tankred Klaus
(86) International application number: PCT/CN2011/072376
(87) International publication number: WO 2011/140864

(57) **Abstract**

The present invention discloses a method, an apparatus and a system for processing local address in an offload connection. The method includes the following steps: a local gateway or a mobility management entity sends a local gateway identifier to a wireless side network element (S702); the wireless side network element obtains the local address of the local gateway by using the local gateway identifier (S704). The present invention avoids potential safety hazard.

## Description

### Field of the Invention

The present invention relates to the communication field, and in particular to a method, an apparatus and a system for processing local address in an offload connection.

### Background of the Invention

The Evolved Packet System (EPS) of the 3rd Generation Partnership Project (3GPP) is composed of an Evolved Universal Terrestrial Radio Access Network (E-UTRAN), a Mobility Management Entity (MME), a Serving Gateway (S-GW), a Packet Data Network Gateway (P-GW or PDN GW), a Home Subscriber Server (HSS), an Authentication, Authorization and Accounting (AAA) server of the 3GPP, a Policy and Charging Rules Function (PCRF) entity and other support nodes.

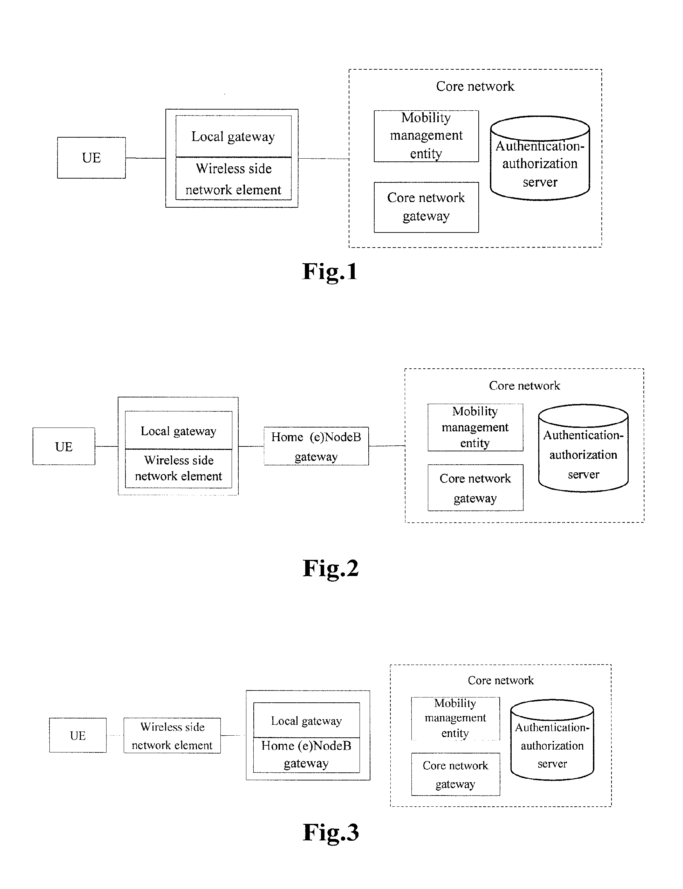

Fig. 1 is a schematic diagram 1 of a wireless communication network connection according to the conventional art. As shown in Fig. 1, a mobility management entity takes charge of mobility management, processing of Non-Access-Stratum (NAS) signalling, management of user mobility management context and other work related to the control plane. The S-GW is an access gateway device which is connected to the E-UTRAN, forwards data between the E-UTRAN and the P-GW, and takes charge of buffering paging wait data. The P-GW is a border gateway of the EPS and a Packet Data Network (PDN), and takes charge of access of the PDN and forwarding data between the EPS and the PDN. Both the S-GW and the P-GW belong to the core network gateway.

A Home (e)NodeB is a small-sized and low-power base station, which is deployed in home, office and other indoor locations, the main functions of the Home (e)NodeB is providing higher service rate for users and reducing cost of using high-rate service, and making up the deficiency of coverage of existing distributed cellular wireless communication system. The Home (e)NodeB is advantaged in being affordable and convenient, low-power output, plug and play and so on. In the Home (e)NodeB system, the Home (e)NodeB is a wireless side network element.

Fig. 2 is a schematic diagram 2 of a wireless communication network connection according to the conventional art. As shown in Fig. 2, the Home (e)NodeB can be either accessed to the core network through a logic gateway, namely a Home (e)NodeB gateway, or directly connected to the core network (as shown in Fig. 1), wherein the main function of the Home (e)NodeB gateway is: verifying security of the Home (e)NodeB, processing register of the Home (e)NodeB, performing operation and maintenance management to the Home (e)NodeB, configuring and controlling the Home (e)NodeB according to requirement of operator and taking charge of exchanging data of core network and the Home (e)NodeB.

Besides supporting access of mobile core network, a mobile communication system (including the Home (e)NodeB system) can also support an IP offload function, and can realize the local access of an UE to other IP devices of the home network or internetwork under the condition that the wireless side network element has an IP offload ability and the user signs contract of allowing IP offload.

Implementation of IP offload in systems shown in Fig. 1, Fig. 2 and Fig. 3 can provide strong support for IP offload technology by adding a local gateway. The local gateway as a gateway for access from local to external network (e.g., Internet) provides functions, such as address assignment, charging, packet filtering, policy control, data offload, NAS/SI-AP/Radios Access Network Application Part (RANAP)/General Tunnelling Protocol (GTP)/Proxy Mobile IP (PMIP)/Mobile IP (MIP) message parsing, Network Address Translation (NAT), IP offload policy routing and execution. The local gateway can be collocated with the wireless side network element.

When there exists a Home (e)NodeB gateway, the local gateway can be either collocated with the Home (e)NodeB (as shown in Fig. 2) or separately, or collocated with the Home (e)NodeB gateway (as shown in Fig. 3) or separately.

In the above, the local gateway can be a Local Serving Gateway (L-SGW) and Local Packet Gateway (L-PGW), can also be a separate L-PGW, or a traffic offload function entity. In addition, the Home (e)NodeB gateway can be collocated with the Home (e)NodeB.

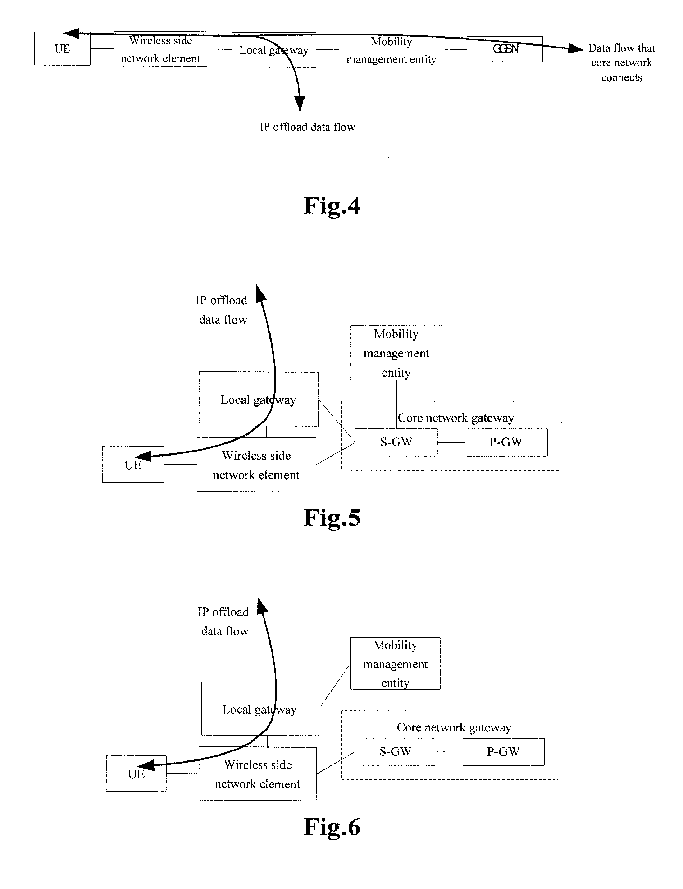

Fig. 4 is a schematic diagram 1 of an IP offload data of wireless communication system according to the conventional art. Fig. 5 is a schematic diagram 2 of an IP offload data of wireless communication system according to conventional technologies. Fig. 6 is a schematic diagram 3 of an IP offload data of wireless communication system according to the conventional art. Taking the communication system of Fig. 1 for example, the IP offload can be implemented by adding (as shown in Fig. 4) or not adding (as shown in Fig. 5 and Fig. 6) a NAT function to the local gateway, which is not limited to implementing function of accessing core network as well as function of accessing IP offload at the same time through one connection.

In above process of establishing IP offload connection, the local gateway transmits its local address to the wireless side network element through the mobility management entity. Similarly, the wireless side network element also transmits its local address to the local gateway through the mobility management entity. However, the local address of the local gateway and the local address of the wireless side network element usually belong to internal information of enterprise or home, and exposing the information to the core network will cause local area network address layout of enterprise or home to leak out, so there is potential safety hazard.

### Summary of the Invention

The present invention is provided aiming at the problem that the local gateway and/or the wireless side network element transmit/transmits local address to cause local area network address layout to leak out. Therefore, the present invention mainly aims to provide a method, an apparatus and a system for processing local address in an offload connection, so as to solve the problem.

According to an aspect of the present invention, a method for processing a local address in an offload connection is provided.

The method for processing a local address in an offload connection according to the present invention comprising the following steps: sending, by a local gateway or a mobility management entity, a local gateway identifier to a wireless side network element; and obtaining, by the wireless side network element, the local address of the local gateway by using the local gateway identifier.

The step of obtaining, by the wireless side network element, the local address of the local gateway by using the local gateway identifier comprises: using, by the wireless side network element, the local gateway identifier during a Domain Name Server (DNS) interrogation.

The step of obtaining, by the wireless side network element, the local address of the local gateway by using the local gateway identifier further comprises: obtaining, by the wireless side network element, the local address of the local gateway by using the local gateway identifier and using information of corresponding relationship between the local gateway identifier and the local address, wherein the information of corresponding relationship is saved by the wireless side network element.

The offload connection includes one of the following: an attachment procedure, a Packet Data Network (PDN) connectivity request procedure, a service request procedure, a handover procedure and a location update procedure; the local gateway identifier or the wireless side network element identifier comprises one of the following: a domain name, an Identifier (ID), a Fully Qualified Domain Name (FQDN); the local gateway comprises one of the following: a Local Serving Gateway (L-SGW) and Local Packet Gateway (L-PGW), a separate L-PGW, a Local Gateway General Packet Radio Service Support Node (L-GGSN) and Local Serving General Packet Radio Service Support Node (L-SGSN), a separate L-GGSN, a traffic offload function entity; and the wireless side network element comprises one of the following: a base station, a Home (e)NodeB, a Radio Network Controller (RNC), a local gateway, an offload function entity.

For achieving above aim, according to an aspect of the present invention, a method for processing a local address in an offload connection is further provided.

The method for processing a local address in an offload connection according to the present invention comprising: sending, by a wireless side network element or a mobility management entity, a wireless side network element identifier to a local gateway; and obtaining, by the local gateway, the local address of the wireless side network element by using the wireless side network element identifier.

The step of obtaining, by the local gateway, the local address of the wireless side network element by using the wireless side network element identifier comprises: using, by the local gateway, the wireless side network element identifier during a Domain Name Server (DNS) interrogation.

The step of obtaining, by the local gateway, the local address of the wireless side network element by using the wireless side network element identifier further comprises: obtaining, by the local gateway, the local address of the wireless side network element by using the wireless side network element identifier and using information of corresponding relationship between the wireless side network element identifier and the local address, wherein the information of corresponding relationship is saved by the local gateway.

The offload connection comprises one of the following: an attachment procedure, a PDN connectivity request procedure, a service request procedure, a handover procedure and a location update procedure; the local gateway identifier or the wireless side network element identifier comprises one of the following: a domain name, an identifier (ID), a Fully Qualified Domain Name (FQDN); the local gateway comprises one of the following: a Local Serving Gateway (L-SGW) and Local Packet Gateway (L-PGW), a separate L-PGW, a Local Gateway General Packet Radio Service Support Node (L-GGSN) and Local Serving General Packet Radio Service Support Node (L-SGSN), a separate L-GGSN, a traffic offload function entity; and the wireless side network element comprises one of the following: a base station, a Home (e)NodeB, a Radio Network Controller (RNC), a local gateway, an offload function entity.

For achieving above aim, according to another aspect of the present invention, a local gateway is provided.

The local gateway according to the present invention comprises:
a first sending module, configured to send a local gateway identifier to a wireless side network element, wherein the local gateway identifier is used for identifying a local address of the local gateway in an offload connection; and a first obtaining module, configured to obtain the local address of the wireless side network element by using the wireless side network element identifier.

For achieving above aim, according to another aspect of the present invention, a wireless side network element is further provided.

The wireless side network element according to the present invention comprises: a second sending module, configured to send a wireless side network element identifier to a local gateway, wherein the wireless side network element identifier is used for identifying a local address of the wireless side network element in an offload connection; and a second obtaining module, configured to obtain the local address of the local gateway by using a local gateway identifier.

For achieving above aim, according to another aspect of the present invention, a system for processing a local address in an offload connection is further provided.

The system for processing a local address in an offload connection according to the present invention comprises the above local gateway and the above wireless side network element.

With the present invention, by means of obtaining the local address of the local gateway/the wireless side network element by using the local gateway identifier/the wireless side network element identifier, the problem that the local gateway and/or the wireless side network element transmit/transmits local address to cause local area network address layout to leak out is solved, thereby avoiding potential safety hazard.

### Brief Description of the Drawings

Drawings, provided for further understanding of the present invention and forming a part of the specification, are used to explain the present invention together with embodiments of the present invention rather than to limit the present invention, wherein:
Fig. 1 is a schematic diagram 1 of a wireless communication network connection according to the conventional art;
Fig. 2 is a schematic diagram 2 of a wireless communication network connection according to the conventional art;
Fig. 3 is a schematic diagram 3 of a wireless communication network connection according to the conventional art;
Fig. 4 is a schematic diagram 1 of an IP offload data of wireless communication system according to the conventional art;
Fig. 5 is a schematic diagram 2 of an IP offload data of wireless communication system according to the conventional art;
Fig. 6 is a schematic diagram 3 of an IP offload data of wireless communication system according to the conventional art;
Fig. 7 is a flowchart 1 of a method for processing local address in an offload connection according to an embodiment of the present invention;
Fig. 8 is a flowchart 2 of a method for processing local address in an offload connection according to an embodiment of the present invention;
Fig. 9 is a flowchart that user initially accesses to perform IP offload connection and core network connection establishing process based on the system in Fig. 1 and the data flow in Fig. 5 according to the preferred embodiment 1 of the present invention;
Fig. 10 is a flowchart that user initially accesses to perform IP offload connection and core network connection establishing process based on the system in Fig. 1 and the data flow in Fig. 6 according to the preferred embodiment 2 of the present invention;
Fig. 11 is a flowchart that a UE performs service request procedure when switching from idle mode to active mode based on the system in Fig. 1 and the data flow in Fig. 5 according to the preferred embodiment 3 of the present invention;
Fig. 12 is a flowchart that a UE performs handover procedure based on the system in Fig. 1 and the data flow in Fig. 5 according to the preferred embodiment 4 of the present invention;
Fig. 13 is a flowchart that a UE performs location update procedure based on the system in Fig. 1 and the data flow in Fig. 5 according to the preferred embodiment 5 of the present invention;
Fig. 14 is a structure diagram of a local gateway according to an embodiment of the present invention;
Fig. 15 is a structure diagram of a wireless side network element according to an embodiment of the present invention; and
Fig. 16 is a structure diagram of a system for processing local address in an offload connection according to an embodiment of the present invention.

### Detailed Description of the Embodiments

The technical solution of the present invention is described below with reference to the accompanying drawings and embodiments in detail, so as to enable the skilled personnel in the field to better understand the present invention and implement; but the embodiments are not intended to limit the present invention.

The following embodiments are based on application scenarios of the E-UTRAN system; the system is composed of a local gateway, a wireless side network element and the like.

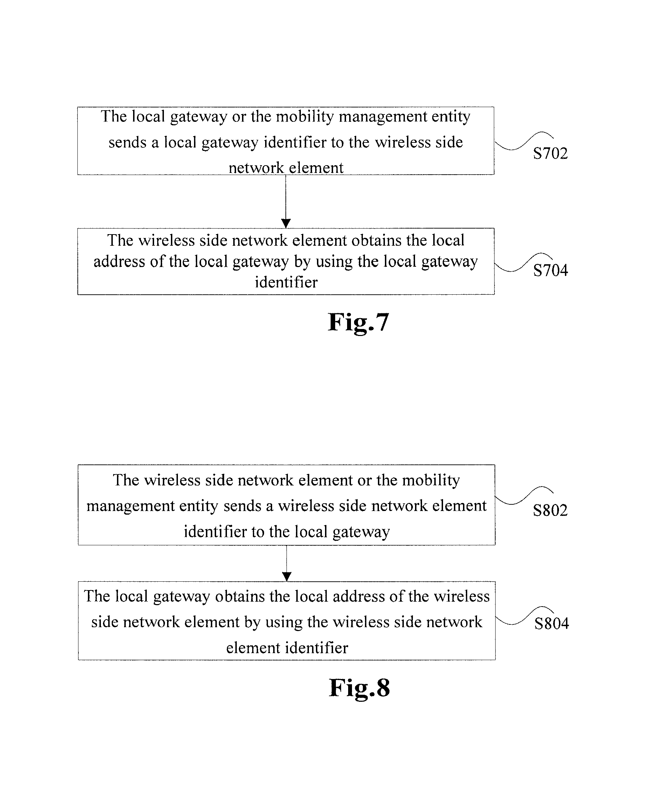

Fig. 7 is a flowchart 1 of a method for processing a local address in an offload connection according to an embodiment of the present invention, comprising the following steps.

Step S702: the local gateway or a mobility management entity sends a local gateway identifier to the wireless side network element.

Step S704: the wireless side network element obtains a local address of the local gateway by using a local gateway identifier.

In conventional art, the local gateway or the mobility management entity directly sends its local address to the wireless side network element. In embodiments of the present invention, the local gateway identifier can be used for identifying the local address of the local gateway; by means of sending the local gateway identifier to the wireless side network element through the local gateway or the mobility management entity, it can ensure that the wireless side network element obtains the local address and avoids local area network address layout from leaking out, thereby avoiding potential safety hazard.

Preferably, the local address of the local gateway can be obtained by one of the following methods.
(1) the wireless side network element uses the local gateway identifier during a DNS interrogation.
   It should be noted that, the local gateway identifier can be used as DNS querying parameter during a DNS interrogation. In this preferred embodiment, the result of querying the local address through the DNS is accurate.
(2) the wireless side network element obtains the local address of the local gateway by using the local gateway identifier and using information of corresponding relationship between the local gateway identifier and the local address, wherein the information of corresponding relationship is saved by the wireless side network element.

It should be noted that, in this preferred embodiment, the means of directly obtaining the local address through the information of corresponding relationship is convenient and fast to operate.

Preferably, the local gateway sends the local gateway identifier to the wireless side network element through the mobility management entity.

It should be noted that, in this preferred embodiment, transmission of the local gateway identifier is performed only by the mobility management entity. In practical application, other methods and systems adopting conception of the present invention shall fall within the scope of the claims of the present invention.

Preferably, the offload connection comprises an attachment procedure, a PDN Connectivity Request procedure, a service request procedure, a handover procedure and location update procedure. The local gateway identifier or the wireless side network element identifier comprises a domain name, an ID and a FQDN. The local gateway comprises: an L-SGW and L-PGW, a separate L-PGW, an L-GGSN and L-SGSN, a separate L-GGSN, and a traffic offload function entity. The wireless side network element comprises a base station, a Home (e)NodeB, a RNC, a local gateway and an offload function entity. The mobility management entity comprises a MME, a MSC and a SGSN.

Fig. 8 is a flowchart 2 of a method for processing local address in an offload connection according to an embodiment of the present invention, comprising the following steps.

Step S802: a wireless side network element or a mobility management entity sends a wireless side network element identifier to a local gateway.

Step S804: the local gateway obtains a local address of the wireless side network element by using the wireless side network element identifier.

In conventional art, the wireless side network element or the mobility management entity directly sends its local address to the local gateway. In embodiments of the present invention, the wireless side network element identifier can be used for identifying the local address of the wireless side network element; by means of sending the wireless side network element identifier to the local gateway through the wireless side network element or the mobility management entity, it can ensure that the local gateway obtains the local address and avoids local area network address layout from leaking out, thereby avoiding potential safety hazard.

Preferably, the local address of the local gateway can be obtained by one of the following methods.
(1) the step of the local gateway obtaining the local address of the wireless side network element by using the wireless side network element identifier comprises that: the local gateway uses the wireless side network element identifier during the DNS interrogation.
   It should be noted that, the wireless side network element identifier can be used as DNS querying parameter during the DNS interrogation. In this preferred embodiment, the result of querying the local address through the DNS is accurate.
(2) the step of the local gateway obtaining the local address of the wireless side network element by using the wireless side network element identifier further comprises that: the local gateway obtains the local address of the wireless side network element by using the wireless side network element identifier and using information of the corresponding relationship between the wireless side network element identifier and the local address, wherein the information of corresponding relationship is saved by the local gateway.

It should be noted that, in this preferred embodiment, the means of directly obtaining the local address through the information of correspondence is convenient and fast to operate.

Preferably, the offload connection comprises an attachment procedure, a PDN Connectivity Request procedure, a service request procedure, a handover procedure and location update procedure. The local gateway identifier or the wireless side network element identifier comprises a domain name, an ID and a FQDN. The local gateway comprises: an L-SGW and L-PGW, a separate L-PGW, an L-GGSN and L-SGSN, a separate L-GGSN and a traffic offload function entity. The wireless side network element comprises a base station, a Home (e)NodeB, a RNC, a local gateway and an offload function entity.

To help understand above embodiments, multiple other preferred embodiments of the present invention are further described below.

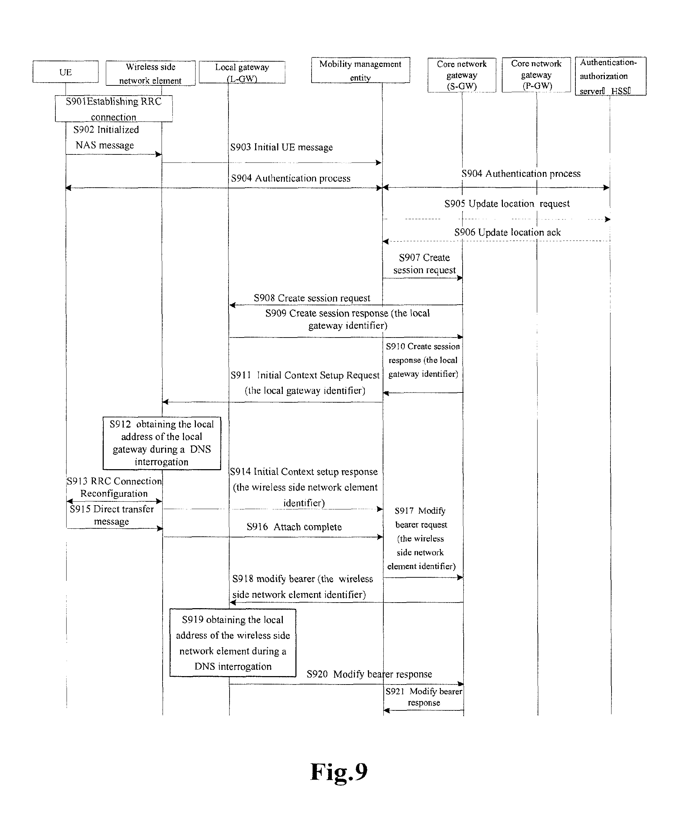

Fig. 9 is a flowchart that user initially accesses to perform IP offload connection and core network connection establishing process based on the system in Fig. 1 and the data flow in Fig. 5 according to the preferred embodiment 1 of the present invention, comprising the following steps.

Step S901: prior to communication, a user needs to establish a Radio Resource Control (RRC) connection as a bearer of signalling message or service data.

Step S902: the user sends an initialized NAS message to perform attachment operation.

Step S903: the wireless side network element sends an initial UE message to the mobility management entity, and forwards the NAS message to the mobility management entity, wherein the message that the wireless side network element sends to the mobility management entity can carry the wireless side network element identifier.

Step S904: the mobility management entity starts an authentication and security process to verify the user.

Step S905: the mobility management entity requests the HSS to perform location update.

Step S906: the HSS returns an update location ack to the mobility management entity.

Step S907: when the mobility management entity determines that it is needed to establish an IP offload connection according to subscription information or local policy, the local gateway identifier can be obtained when querying the local gateway though the DNS; the mobility management entity sends a create session request to the S-GW, and establishes the IP offload connection.

Step S908: the S-GW sends a create session request message to the local gateway.

Step S909: the local gateway sends a create session response to the S-GW, wherein the response can carry the local gateway identifier.

Step S910: the S-GW sends a create session response to the mobility management entity, wherein the response can carry the local gateway identifier.

Step S911: the mobility management entity initiates an Initial Context Setup Request to the wireless side network element, wherein the request carries the local gateway identifier.

The mobility management entity can obtain the local gateway identifier through Step S907 or Step S910.

Step S912: the wireless side network element performs a DNS interrogation according to the local gateway identifier, or obtains the local address of the local gateway to which the local gateway identifier corresponds through local configuration information (configuring the corresponding relationship between the local gateway identifier and its local address).

In the above, the local gateway identifier can be used as DNS querying parameter during a DNS interrogation.

Step S913: the RRC Connection Reconfiguration process is performed.

Step S914: the wireless side network element returns an Initial Context Setup Response to the mobility management entity, wherein the response can carry the wireless side network element identifier.

Step S915: the UE sends a direct transfer message to the wireless side network element, wherein the message includes attach complete information.

Step S916: the wireless side network element sends an attach complete message to the mobility management entity.

Step S917: the mobility management entity requests the S-GW for a modify bearer, wherein the modify bearer request carries the wireless side network element identifier.

The mobility management entity can obtain the wireless side network element identifier through Step S903 or Step S914;

Step S918: the S-GW sends a modify bearer request message to the local gateway, wherein the message carries the wireless side network element identifier.

Step S919: the local gateway performs a DNS interrogation according to the wireless side network element identifier or obtains the local address of the wireless side network element to which the wireless side network element identifier corresponds through local configuration information (configuring the corresponding relationship between the wireless side network element identifier and its local address).

In the above, when performing a DNS interrogation, the wireless side network element identifier can be used as a DNS querying parameter.

Step S920: the local gateway returns a modify bearer response message to the S-GW.

Step S921: the S-GW returns a modify bearer response message to the mobility management entity.

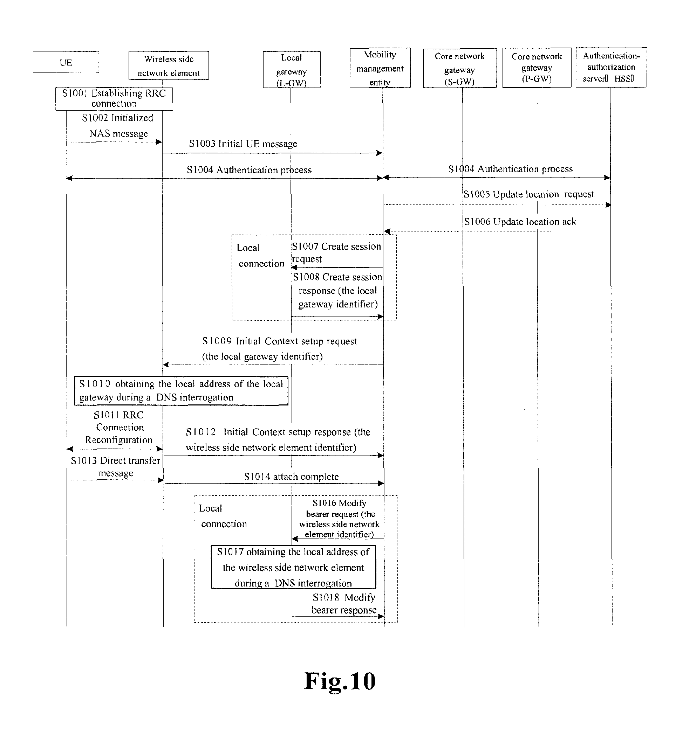

Fig. 10 is a flowchart that a user initially accesses to perform IP offload connection and core network connection establishing process based on the system in Fig. 1 and the data flow in Fig. 6 according to the preferred embodiment 2 of the present invention, comprising the following steps.

Step S1001: prior to communication, a user needs to establish a RRC connection as bearer of signalling message or service data.

Step S1002: the user sends an initialized NAS message to perform attachment operation.

Step S1003: the wireless side network element sends an initial UE message to the mobility management entity, and forwards the NAS message to the mobility management entity, wherein the message that the wireless side network element sends to the mobility management entity can carry the wireless side network element identifier.

Step S 1004: the mobility management entity starts an authentication and security process to verify user.

Step S1005: the mobility management entity requests the HSS to perform location update.

Step S 1006: the HSS returns an update location ack to the mobility management entity.

Step S1007: when the mobility management entity determines that it is needed to establish an IP offload connection according to subscription information or local policy, the local gateway identifier can be obtained when querying the local gateway though the DNS; the mobility management entity sends a create session request to the S-GW, and establishes the IP offload connection;

Step S1008: the local gateway sends a create session response to the mobility management entity, wherein the response can carry the local gateway identifier.

Step S1009: the mobility management entity initiates an Initial Context Setup Request to the wireless side network element, wherein the request carries the local gateway identifier.

The mobility management entity can obtain the local gateway identifier through Step S 1007 or Step S 1008;

Step S1010: the wireless side network element performs a DNS interrogation according to the local gateway identifier or obtains the local address of the local gateway to which the local gateway identifier corresponds through local configuration information (configuring the corresponding relationship between the local gateway identifier and its local address).

In the above, the local gateway identifier can be used as a DNS querying parameter during a DNS interrogation.

Step S1011: the RRC Connection Reconfiguration process is performed.

Step S 1012: the wireless side network element returns an Initial Context Setup Response to the mobility management entity, wherein the response can carry the wireless side network element identifier.

Step S1013: the UE sends a direct transfer message to the wireless side network element, wherein the message comprises attach complete information.

Step S1014: the wireless side network element sends an attach complete message to the mobility management entity.

Step S1015: the mobility management entity requests the local gateway for modify bearer, wherein the modify bearer carries the wireless side network element identifier.

The mobility management entity can obtain the wireless side network element identifier through Step S1003 or Step S1012.

Step S1016: the local gateway performs a DNS interrogation according to the wireless side network element identifier or obtains the local address of the wireless side network element to which the wireless side network element identifier corresponds through local configuration information (configuring corresponding relationship between the wireless side network element identifier and its local address).

In the above, the wireless side network element identifier can be used as a DNS querying parameter during a DNS interrogation.

Step S 1017: the local gateway returns a modify bearer response message to the mobility management entity.

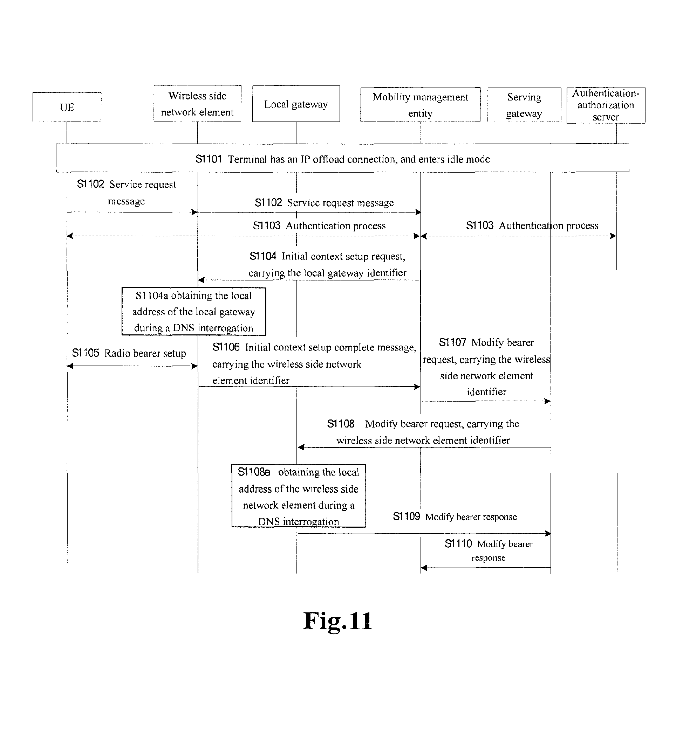

Fig. 11 is a flowchart that a UE performs service request procedure when switching from idle mode to active mode based on the system in Fig. 1 and the data flow in Fig. 5 according to the preferred embodiment 3 of the present invention, comprising the following steps:

Step S1101: the UE has an IP offload connection after accessing wireless communication system, after that, the UE enters idle mode;

Step S 1102: the UE initiates a service request to the mobility management entity through the wireless side network element. The message that the wireless side network element sends to the mobility management entity can carry the wireless side network element identifier.

Step S 1103: the NAS authentication process is performed, and the step is optional.

Step S1104: when determining that it is needed to establish an IP offload connection, the mobility management entity sends an Initial Context Setup Request message to the wireless side network element, wherein the message carries the local gateway identifier.

Step S1104a: the wireless side network element performs a DNS interrogation according to the local gateway identifier or obtains the local address of the local gateway to which the local gateway identifier corresponds through local configuration information (configuring corresponding relationship between the local gateway identifier and its local address).

In the above, the local gateway identifier can be used as a DNS querying parameter during a DNS interrogation.

Step S1105: the wireless side network element performs radio bearer establishment procedure.

Step S 1106: the wireless side network element returns an initial context setup complete message to the mobility management entity, wherein the message can carry the wireless side network element identifier.

Step S 1107: the mobility management entity sends a modify bearer request message to the S-GW, wherein the message carries the wireless side network element identifier.

The mobility management entity can obtain the wireless side network element identifier through Step S1003 or Step S 1106.

Step S1108: the S-GW sends a modify bearer request message to the local gateway, wherein the message carries the wireless side network element identifier.

Step S1108a: the local gateway performs a DNS interrogation according to the wireless side network element identifier or obtains the local address of the wireless side network element to which the wireless side network element identifier corresponds through local configuration information (configuring corresponding relationship between the wireless side network element identifier and its local address);

In the above, the wireless side network element identifier can be used as a DNS querying parameter during a DNS interrogation.

Step S1109: the local gateway returns a modify bearer response message to the S-GW.

Step S1110: the S-GW returns a modify bearer response message to the mobility management entity.

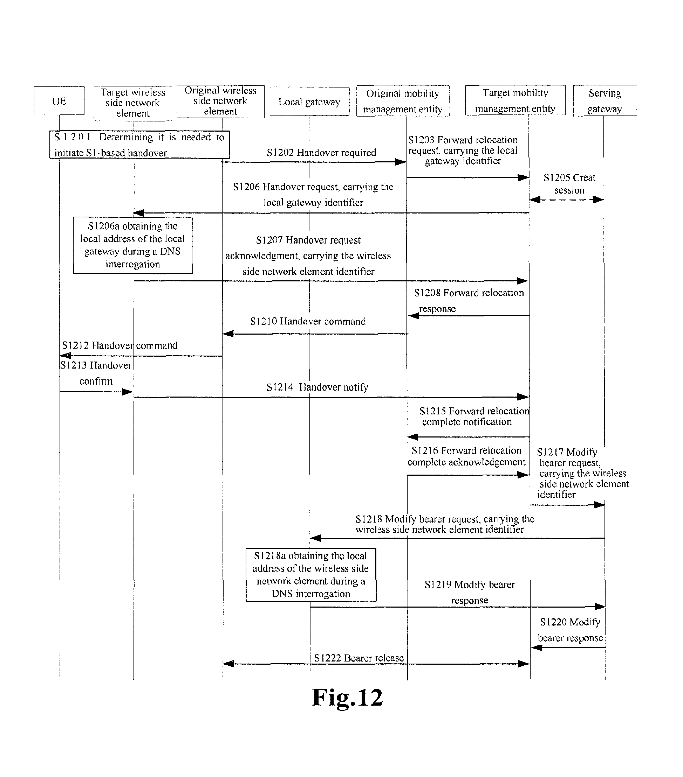

Fig. 12 is a flowchart that a UE performs handover procedure based on the system in Fig. 1 and the data flow in Fig. 5 according to the preferred embodiment 4 of the present invention, comprising the following steps.

Step S1201: the wireless side network element determines that it is needed to initiate S1-based handover.

Step S1202: a source wireless side network element sends a handover required to an original mobility management entity. The message that the original wireless side network element sends to the original mobility management entity can carry a target wireless side network element identifier.

The original wireless side network element can obtain the target wireless side network element identifier by the following way: the UE obtains the target wireless side network element identifier through a broadcast message, and then sends the information to the original wireless side network element in Step S1201.

Step S 1203: the original mobility management entity carries the local gateway identifier in a forward relocation request message which is sent to a target mobility management entity, wherein the message can carry the target wireless side network element identifier;

Step S120S: the target mobility management entity can initiate a create session procedure of an IP offload connection to the S-GW.

Step S1206: the target mobility management entity requests a target wireless side network element to perform handover, wherein the local gateway identifier is carried.

Step S1206a: the wireless side network element performs a DNS interrogation according to the local gateway identifier or obtains the local address of the local gateway to which the local gateway identifier corresponds through local configuration information (configuring corresponding relationship between the local gateway identifier and its local address).

In the above, the local gateway identifier can be used as a DNS querying parameter during a DNS interrogation.

Step S1207: the target wireless side network element returns a handover request acknowledgement message to the target mobility management entity, wherein the message can carry the wireless side network element identifier.

Step S1208: the target mobility management entity sends a forward relocation response message to the original mobility management entity.

Step S1210: the original mobility management entity sends a handover command to the original wireless side network element.

Step S1212: the original wireless side network element sends a handover command to the UE.

Step S1213: the UE initiates a handover confirm message to the target wireless side network element.

Step S1214: the target wireless side network element notifies the target mobility management entity to perform handover.

Step S1215: the target wireless side network element sends a forward relocation complete notification message to the original mobility management entity.

Step S1216: the original wireless side network element returns a forward relocation complete acknowledgement message to the target mobility management entity.

Step S1217: the target mobility management entity sends a modify bearer request to the S-GW, wherein the request carries the wireless side network element identifier.

The target mobility management entity can obtain the target wireless side network element identifier through Step S1203 or Step S1207.

Step S1218: the S-GW sends a modify bearer request to the local gateway, wherein the request carries the wireless side network element identifier.

Step S1218a: the local gateway performs a DNS interrogation according to the wireless side network element identifier or obtains the local address of the wireless side network element to which the wireless side network element identifier corresponds through local configuration information (configuring corresponding relationship between the wireless side network element identifier and its local address).

In the above, the wireless side network element identifier can be used as a DNS querying parameter during a DNS interrogation.

Step S 1219: the local gateway returns a modify bearer response to the S-GW.

Step S1220: the S-GW returns a modify bearer response message to the target mobility management entity.

Step S1222: the target mobility management entity initiates a UE context release process to the original wireless side network element.

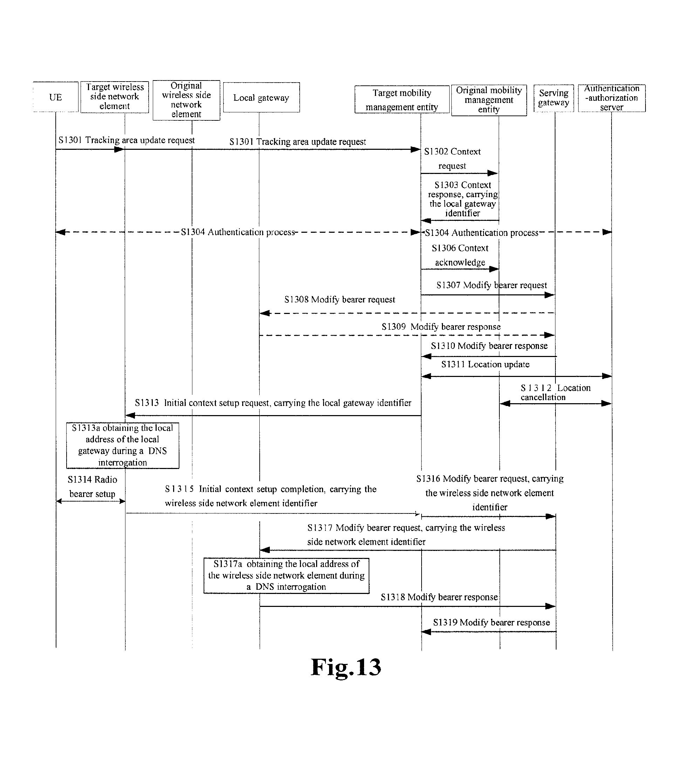

Fig. 13 is a flowchart that a UE performs location update procedure based on the system in Fig. 1 and the data flow in Fig. 5 according to the preferred embodiment 5 of the present invention, comprising the following steps.

Step S1301: the UE sends a tracking area update request message to the mobility management entity through the target wireless side network element, wherein the message can carry an activation identifier; the message that the target wireless side network element sends to the mobility management entity can carry the target wireless side network element identifier.

Step S 1302: the target mobility management entity sends a context request message to the original mobility management entity.

Step S1303: the original mobility management entity sends a context response message to the target mobility management entity, wherein the message carries the local gateway identifier.

Step S1304: optionally, the UE, the mobility management entity and the authentication-authorization server perform an authentication process.

Step S1306: the target mobility management entity sends a context acknowledge message to the original mobility management entity.

Step S1307: the target mobility management entity requests the S-GW for bearer modifying operation.

Step S1308: the S-GW can send a modify bearer request to the local gateway.

Step S 1309: the local gateway can return a modify bearer response to the S-GW.

Step S1310: the S-GW returns a modify bearer response to the target mobility management entity.

Step S 1311: a location update procedure is performed between the target mobility management entity and the authentication-authorization server.

Step S 1312: a location cancellation process is performed between the authentication-authorization server and the original mobility management entity.

Step S 1313: the target mobility management entity sends an initial context setup request message to the target wireless side network element, wherein the message carries the local gateway identifier.

Step S1313a: the wireless side network element performs a DNS interrogation according to the local gateway identifier or obtains the local address of the local gateway to which the local gateway identifier corresponds through local configuration information (configuring the corresponding relationship between the local gateway identifier and its local address).

In the above, the local gateway identifier can be used as DNS querying parameter during a DNS interrogation.

Step S1314: the target wireless side network element performs radio bearer setup process.

Step S 1315: the target wireless side network element returns an initial context setup response/radio bearer setup completion message to the mobility management entity, wherein the message can carry the wireless side network element identifier.

Step S 1316: the target mobility management entity requests the S-GW to modify bearer; the wireless side network element identifier is carried.

The target mobility management entity can obtain the target wireless side network element identifier through Step S 1301 or Step S 1315.

Step S 1317: the S-GW sends a modify bearer request message to the local gateway, wherein the message carries the wireless side network element identifier.

Step S 1317a: the local gateway performs a DNS interrogation according to the wireless side network element identifier or obtains the local address of the wireless side network element to which the wireless side network element identifier corresponds through local configuration information (configuring the corresponding relationship between the wireless side network element identifier and its local address).

In the above, the wireless side network element identifier can be used as a DNS querying parameter during a DNS interrogation.

Step S 1318: the local gateway returns a modify bearer response to the S-GW.

Step S 1319: the S-GW sends a modify bearer response message to the target mobility management entity.

For simplifying description, above embodiments illustrate management way of IP offload connection by only taking the situation that the local gateway and the wireless side network element are set separately as shown in Fig. 1 for example. Under the situation of systems shown in Fig. 2 and Fig. 3, regardless of the data offload way shown in Fig. 4 or Fig. 5 or Fig. 6 and the UTRAN or the E-UTRAN system, the process of obtaining the local address of gateway (the wireless side network element or the local gateway) of IP offload connection is similar to above embodiments, which does not influence description of the present invention, so it will not be repeated here.

In all of the embodiments, it is allowed to only perform obtaining of the local address of the wireless side network element, instead of performing obtaining of the local address of the local gateway. Also, it is allowed to only perform obtaining of the local address of the local gateway, instead of performing obtaining of the local address of the wireless side network element. Or, obtaining of the local address of the local gateway and obtaining of the local address of the wireless side network element are performed at the same time.

An IP offload connection can be an access to local network of user through local IP, an access to local network of enterprise through local IP, an access to Internet through local IP, an offload operation of Internet service and a specific IP data offload.

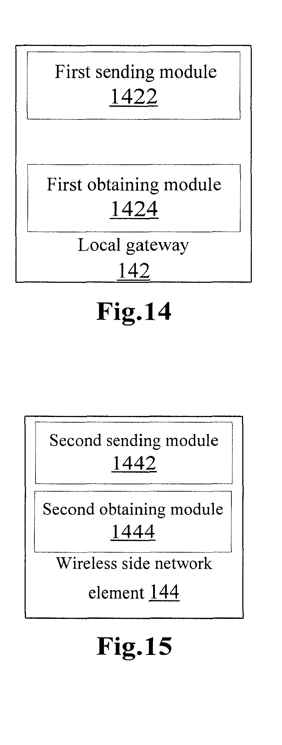

According to embodiments of the present invention, a local gateway 142 is provided. Fig. 14 is a structure diagram of a local gateway according to an embodiment of the present invention, comprising the first sending module 1422 and the first obtaining module 1424.

The first sending module 1422 is configured to send a local gateway identifier to a wireless side network element, wherein the local gateway identifier is used for identifying a local address of the local gateway in an offload connection; and the first obtaining module 1424 is configured to obtain the local address of the wireless side network element by using the wireless side network element identifier.

According to embodiments of the present invention, a wireless side network element 144 is further provided. Fig. 15 is a structure diagram of a wireless side network element according to an embodiment of the present invention, comprising a second sending module 1442 and a second obtaining module 1444.

The second sending module 1442 is configured to send a wireless side network element identifier to a local gateway, wherein the wireless side network element identifier is used for identifying a local address of the wireless side network element in an offload connection; the second obtaining module 1444 is configured to obtain the local address of the local gateway by using a local gateway identifier.

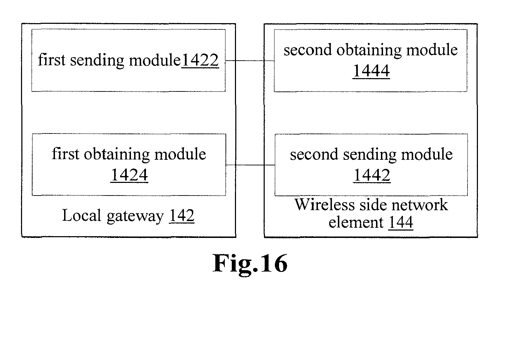

According to embodiments of the present invention, a system for processing local address in an offload connection is further provided, wherein the system can be used for implementing the method for processing local address in an offload connection. Fig. 16 is a structure diagram of a system for processing local address in an offload connection according to an embodiment of the present invention, comprising the local gateway 142 which comprises the first sending module 1422 and the first obtaining module 1424, and the wireless side network element 144 which comprises the second sending module 1442 and the second obtaining module 1444.

In the conventional art, the local gateway directly sends its local address to the wireless side network element, and the wireless side network element directly sends its local address to the local gateway. In embodiments of the present invention, the local gateway identifier can be used for identifying the local address of the local gateway, and the wireless side network element identifier can be used for identifying the local address of the wireless side network element; by means of sending the local gateway identifier to the wireless side network element through the first sending module 1422, and/or sending the local gateway identifier to the local gateway through the second sending module 1442, it can ensure them obtains the local address and avoids local area network address layout from leaking out, thereby avoiding potential safety hazard.

To sum up, according to above embodiments of the present invention, the local gateway and the wireless side network element adopt an effective and concealed way of obtaining local address, which can prevent local address related information of enterprise or home from leaking out. In a manner of obtaining the local address of the local gateway by using the local gateway identifier, the problem that the local gateway and/or the wireless side network element transmit/transmits local address to cause local area network address layout to leak out is solved, thereby greatly improving safety and reliability of wireless communication system, and avoiding potential safety hazard.

Obviously, those skilled in the art shall understand that the above-mentioned modules and steps of the present invention can be realized by using general purpose calculating device, can be integrated in one calculating device or distributed on a network which consists of a plurality of calculating devices. Alternatively, the modules and the steps of the present invention can be realized by using the executable program code of the calculating device. Consequently, they can be stored in the storing device and executed by the calculating device, or they are made into integrated circuit module respectively, or a plurality of modules or steps thereof are made into one integrated circuit module. In this way, the present invention is not restricted to any particular hardware and software combination.

The descriptions above are only the preferable embodiment of the present invention, which are not used to restrict the present invention. For those skilled in the art, the present invention may have various changes and variations. Any amendments, equivalent substitutions, improvements, etc. within the principle of the present invention are all included in the scope of the protection of the present invention.

## Claims

1. A method for processing a local address in an offload connection, **characterized by** comprising:
sending, by a local gateway or a mobility management entity, a local gateway identifier to a wireless side network element; and
obtaining, by the wireless side network element, the local address of the local gateway by using the local gateway identifier.

2. The method according to Claim 1, **characterized in that** the step of obtaining, by the wireless side network element, the local address of the local gateway by using the local gateway identifier comprises:
using, by the wireless side network element, the local gateway identifier during a Domain Name Server (DNS) interrogation.

3. The method according to Claim 1, **characterized in that** the step of obtaining, by the wireless side network element, the local address of the local gateway by using the local gateway identifier further comprises:
obtaining, by the wireless side network element, the local address of the local gateway by using the local gateway identifier and using information of corresponding relationship between the local gateway identifier and the local address, wherein the information of corresponding relationship is saved by the wireless side network element.

4. The method according to any one of Claims 1 to 3, **characterized in that**
the offload connection comprises one of the following: an attachment procedure, a Packet Data Network (PDN) connectivity request procedure, a service request procedure, a handover procedure and a location update procedure;
the local gateway identifier or the wireless side network element identifier comprises one of the following: a domain name, an Identifier (ID), a Fully Qualified Domain Name (FQDN);
the local gateway comprises one of the following: a Local Serving Gateway (L-SGW) and Local Packet Gateway (L-PGW), a separate L-PGW, a Local Gateway General Packet Radio Service Support Node (L-GGSN) and Local Serving General Packet Radio Service Support Node (L-SGSN), a separate L-GGSN, a traffic offload function entity; and
the wireless side network element comprises one of the following: a base station, a Home (e)NodeB, a Radio Network Controller (RNC), a local gateway, an offload function entity.

5. A method for processing a local address in an offload connection, **characterized by** comprising:
sending, by a wireless side network element or a mobility management entity, a wireless side network element identifier to a local gateway; and
obtaining, by the local gateway, the local address of the wireless side network element by using the wireless side network element identifier.

6. The method according to Claim 5, **characterized in that** the step of obtaining, by the local gateway, the local address of the wireless side network element by using the wireless side network element identifier comprises:
using, by the local gateway, the wireless side network element identifier during a Domain Name Server (DNS) interrogation.

7. The method according to Claim 5, **characterized in that** the step of obtaining, by the local gateway, the local address of the wireless side network element by using the wireless side network element identifier further comprises:
obtaining, by the local gateway, the local address of the wireless side network element by using the wireless side network element identifier and using information of corresponding relationship between the wireless side network element identifier and the local address, wherein the information of corresponding relationship is saved by the local gateway.

8. The method according to any one of Claims 5 to 7, **characterized in that**
the offload connection comprises one of the following: an attachment procedure, a Packet Data Network (PDN) connectivity request procedure, a service request procedure, a handover procedure, a location update procedure;
the local gateway identifier or the wireless side network element identifier comprises one of the following: a domain name, an identifier (ID), a Fully Qualified Domain Name (FQDN);
the local gateway comprises one of the following: a Local Serving Gateway (L-SGW) and Local Packet Gateway (L-PGW), a separate L-PGW, a Local Gateway General Packet Radio Service Support Node (L-GGSN) and Local Serving General Packet Radio Service Support Node (L-SGSN), a separate L-GGSN, a traffic offload function entity; and
the wireless side network element comprises one of the following: a base station, a Home (e)NodeB, a Radio Network Controller (RNC), a local gateway, an offload function entity.

9. A local gateway, **characterized by** comprising:
a first sending module, configured to send a local gateway identifier to a wireless side network element, wherein the local gateway identifier is used for identifying a local address of the local gateway in an offload connection; and
a first obtaining module, configured to obtain the local address of the wireless side network element by using the wireless side network element identifier.

10. A wireless side network element, **characterized by** comprising:
a second sending module, configured to send a wireless side network element identifier to a local gateway, wherein the wireless side network element identifier is used for identifying a local address of the wireless side network element in an offload connection; and
a second obtaining module, configured to obtain the local address of the local gateway by using a local gateway identifier.

11. A system for processing local address in an offload connection, **characterized by** comprising the local gateway in Claim 9 and the wireless side network element in Claim 10.
